Europäisches Patentamt

European Patent Office

Office européen des brevets

(11) Publication number: **0 262 244**
A1

# EUROPEAN PATENT APPLICATION

(21) Application number: 86113477.3

(22) Date of filing: 01.10.86

(51) Int. Cl.⁴: **B29C 35/02** , B29C 67/14 , B29C 53/04 , //B29K105:24

(43) Date of publication of application:
06.04.88 Bulletin 88/14

(84) Designated Contracting States:
CH DE ES FR GB IT LI NL

(71) Applicant: **Cyanamid de Argentina S.A.I.C.**
**5051 Charcas Street**
**1425 Buenos Aires(AR)**

(72) Inventor: **The inventor has agreed to waive his entitlement to designation**

(74) Representative: **Wächtershäuser, Günter, Dr.**
**Tal 29**
**D-8000 München 2(DE)**

(54) Method and apparatus for manufacturing structural, constitutive members, usable as bodies or modular strips.

(57) A modular strip, a method and an apparatus therefor, the method is carried out by additionally polymerizing by heat a partially polymerized sheet-like plastic laminate up to a temperature within 120° and 170°C, and shaping it into the desired shape during a period which is at most equal to the period during which the additional polymerization takes place, the resulting structural member being then cooled and definitely stabilized. The apparatus comprises a mounting frame (8) forming a conveying track (12) for the plastic laminate, said track including a heating chamber (2) ending in a mechanical molding zone on which a plurality of molding wall surfaces (6) are provided and are placed on each side of the center line of the track, said molding zone ending in a cooling zone for cooling the already molded strip. The modular strip having a tension-free flat central portion and opposite flanges defining together a C-shaped cross-section.

FIG.1

## "METHOD AND APPARATUS FOR MANUFACTURING STRUCTURAL, CONSTITUTIVE MEMBERS, USABLE AS BODIES OR MODULAR STRIPS".

### BACKGROUND OF THE INVENTION

#### Field of the Invention

The present invention relates to a method for manufacturing structural, constitutive members, such as modular strips from plastic laminates, for forming decorative liners, covers in general, ceilings and the like, as well as to produce containers, etc. The invention furthermore relates to an apparatus for producing modular strips in accordance with the method of the invention. Thus, the invention also refers to the above cited modular strip which has novel constituent features per se.

Prior to refer in detail to the present invention, it is important to establish that, although throughout the present description reference to a modular strip will be made, for example for sheathing ceilings, it will be understood that the method of the invention is directed to shape a plastic laminate, in order to provide it with any desirable shape, without requiring backing or supporting means remaining bonded to the laminate to maintain such a shape, as was necessary up to now.

#### Description of the Prior Art

Strips having a shape like the one of the present invention are well-known, but up to now they were manufactured by bending aluminium or steel plates. In order to use, for example, aluminium strips for obtaining ceiling liners, it was necessary to cover the strips, for example with paint, in order to provide them with a decorative appearance, compatible with the room where it was to be used. As is known by anyone skilled in the art, with time, the paint wears out, and the decorative aspect of the strips was lost. The use of this kind of metallic strips in the open was even more problematic, due to the weather conditions. These coverings, such as protecting roofs, marquees and the like became completely damaged as a result of the oxide produced.

In view of the above drawbacks, manufacture of this kind of strips was started by using thermoplastic materials. A plurality of shapes were easily obtained for such strips. However, the results were not satisfactory, in view of the changes in shape this kind of material undergoes, upon temperature variations. During use, the strips warped and distorted. Furthermore, the mechanical resistance was not sufficient for mounting and supporting requirements. Another disadvantage was the rapid aging, which resulted in a ceiling covering of low useful life.

In view of the foregoing, those skilled in the art tried to use high-pressure-laminated plastic materials, i.e. thermosetting plastics, which would fulfill the requirements for this kind of structural members. However, many obstacles rised during research testing, since such materials, only available as sheets, cannot be bent to define desired shapes, once they are thermoset. In fact, in the zone to bend, upon doing so, the sheets or strips were broken. Up to now, the manufacturers were unable to produce modular profiled strips, from plastic laminated plates, for example to be used for covering ceilings.

#### Summary of the Invention

It is an object of the present invention to provide a method for obtaining structural or constitutive members, such as modular profiled strips, with all the advantages of the decorative high-pressure-laminated plastic materials, but avoiding all of the disadvantages which up to now barred their manufacture. The present invention provides for the shaping of decorative high-pressure plastic laminates, also known as thermosetting materials, which enables to produce structural members which up to now were not possible with this kind of material. The present invention also provides for a new use, different from the one known, since, up to now, these materials could only be used in combination with supporting materials such as wood, etc. In accordance with the present invention this is unnecessary and a structural self-supporting member, which maintains its shape, may be obtained without requiring supporting materials.

The plastic materials which may be used in accordance with the present invention, falls within the broad range of high-pressure laminates but, as an example, in the present invention reference to plastic laminates based on melamine and celulose will be made, and more particularly to plastic materials the main components of which are, melamine, formol, phenol and cellulose, and is generally called plastic laminates. The results achieved by the present invention with this material, are outstanding.

The plastic laminates subjected to the method of the present invention, enable to obtain many different structural members for use, for example inside or outside in furnitures, such as tables, chairs, display counters, as well as in any kind of liner which may be adapted to the specific requirements, without the necessity of backing members to maintain the shape of a profile, such as used for decorative ceilings.

It will become evident that by means of the method of the present invention a broad field of entirely new possibilities is achieved, since with the several kinds of existing plastic laminates, it will be possible to obtain strips having new textures, colours and novel appearances as opposed to the classical strips obtained from painted metallic plates.

The present invention enables to use laminar materials having particular designs, which so far was not possible. The structural members thereby produced have high rigidity and high resistance and thus, allow for a broader range of use of this material, since the members are self-supporting members having good tensile and deflection resistances.

It is another object of the present invention to provide an apparatus for manufacturing modular strips for forming ceilings in accordance with the method of the invention.

It is a further object of the invention to provide self-supporting constitutive or structural members, particularly modular strips, made of high-pressure-laminated plastic materials.

Thus the present invention provides means for producing a decorative ceiling formed by an arrangement of such self-supporting modular strips.

In conclusion, the present invention provides a method for manufacturing structural constitutive members, such as modular strips, covering profiles, decorative panels, containers and the like, from a plastic laminate such as a high-pressure decorative plastic laminate, said plastic laminate being partially polymerized at a first percentage of its total polymerization, said method comprising the steps of heating said plastic laminate up to a temperature within the range of 120° to 170°C, to carry out a second polymerization of the plastic laminate, molding said plastic laminate into the desired shape simmultaneously with said second polymerization and during a period of time which, as a maximum, is equal to that period of time during which said second polymerization is carried out, subjecting said already molded structural member to the flow of a cooling fluid to thereby cooling and definitively stabilizing said structural member to its final shape, said second polymerization extending up to a second percentage, thus substantially completing the total polymerization of the plastic laminate.

The present invention also provides an apparatus for manufacturing modular strips using to the above method, and comprising a mounting frame defining a conveying track for said plastic laminate and resulting modular strip, the conveying track having an input end for a laminate sheet member and an output end for the resulting modular strip, said track including from said input end towards said output end, a heating chamber connected to a mechanical molding zone having a plurality of molding wall surfaces placed on each side of a longitudinal center line of the track, said molding zone ending in a cooling zone for the already molded strip and said cooling zone ending into said output end.

The invention also refers to a modular strip adapted to form decorative liners, coverings in general, ceilings and the like, using a partially plimerized plastic laminate as starting material, the modular strip having an elongated laminar body comprising a substantially planar central portion defining a center line, a pair of facing curved flanges substantially extending along the total length of the central portion and at the lateral sides thereof, forming a ·C-like cross-section which is resistant and constitutes a self-supporting strip structure, the plastic laminate of the strip being substantially totally polymerized up to a stabilized shape status, wherein at least the central portion of the strip is substantially tension free.

The object, features and advantages of the present invention will be readily apparent from the following detailed description of the preferred mode for carrying out the invention, together with the accompanying drawings.


Brief Description of the Drawings

Figure 1 is a side elevation of the apparatus for producing the modular strips of the invention.

Figure 2 is a plant view of part of the apparatus shown in Figure 1 and more particularly shows the plurality of molding elements, constituted by two series of symmetrically arranged rolls.

Figures 3 to 7 are front views of some pairs of the rolls shown in Figure 2, and wherefrom it may be appreciated how the plastic sheet (shown in cross-section) is being shaped up to its final profile shown in Figure 7.

Figure 8 is a perspective view of a finished modular strip.

The method of the present invention consists in treating a plastic high-pressure decorative pre-polymerized laminate, hereinafter called "plastic laminate", i.e. the starting sheet material is not totally polymerized in order to permit the laminate to be molded into its desirable final shape.

An elongated plate of plastic laminate which is pre-polymerized at a first percentage, is heated, for example, in a heating chamber of the apparatus of the invention, to which reference will be made hereinbelow. During this heating step a second polymerization is carried out. The first polymerization is the one which produces the above mentioned pre-polymerized plastic laminate. When the plastic laminate is based on melamine, formol, phenol and cellulose, the first polymerization should reach a state up to 60% of the total polymerization of the laminate.

Immediately after the heating step, when the plastic sheet or at least the zones to be molded thereof are in a semi-soft state, the laminate is subjected to a sequential series of mechanical molding steps by means of which the marginal zones duly heated are bent. The heating temperature will be approximately at 150°C, when the plastic laminate is based on melamine and cellulose and this temperature will be provided during approximately 10 to 45 seconds to the plastic laminate. However, the temperature range, depending on the kind of plastic laminate utilized, is somewhat broader and the temperature value may be in the range of 120°C to 170°C, and furthermore the 45 seconds are not to be interpreted in a limiting way. The time will be a matter dependent on the design of the apparatus, thus the time during which the heating temperature is reached is not critical for the method of the present invention.

During the heating and molding steps, the second polymerization takes place and will extend up to a percentage of 95 to 98% of the total polymerization of the plastic laminate. Although the polymerization may continue beyond the molding step, the shaping of the structural members must start before the laminate has reached said percentage of polymerization and the final shape of the structural member must be reached at the latest, simultaneously with said substantially total polymerization. Consequently, the second polymerization may be extended beyond the molding step, but must not be concluded before this molding step is finished.

As an example, it may be stated that the mechanical molding of the laminate may be carried out during a period ranging for instance between 3 and 6 seconds, during which period the material is in a semi-soft state. However this time will depend on a series of factors, and what is important is that the material be in semi-soft (flowable) state without reaching the substantially total polymerization, in order to permit its shaping.

Once the mechanical molding is finished, the laminate shaped as a structural member is cooled by means of a suitable fluid which may be a pressurized air flow or spraying water. It should be understood that the second polymerization, i.e. that one which reaches approximately 95 to 98% of the total polymerization, should the latest be concluded at this cooling step. Thus the resulting structural member becomes stabilized in the desired shape and will have the rigidity and mechanical resistance necessary to constitute a self-supporting member.

An example of the method of the invention will now be explained.

EXAMPLE

Strips for forming ceilings from a plastic laminate based on melamine, formol, phenol and cellulose were manufactured, said plastic laminate being in a pre-polymerization state of a 60% of its total polymerization. This laminate was heated within a heating chamber at a temperature of 150°C during 12,5 seconds. Thereafter, the laminate was withdrawn from the heating chamber in a semi-soft state and was mechanically molded in successive molding devices during 3 seconds in order to obtain the desired shape.

Then, the laminate already molded was cooled by means of a spray of cooling water at a rate of 90 liters per hour, sprayed by means of pressurized air at a pressure of 4 kilograms per square centimeter with a flow of 45 cubic meters per hour.

The laminate was conveyed through the steps of heating, molding and cooling at 12 meters per minute.

The modular molded strip was cut into desirable lengths in accordance with the ceiling to be covered.

As an example, and in order to describe the preferred apparatus for carrying the method of the invention, reference will be made to the shaping of a structural member consisting in a modular strip for forming ceilings.

The apparatus 1, for forming modular strips for ceilings, comprises a mounting frame 8 defining a conveying path or track 12 along which the sheet 4 travels.

The apparatus is divided into three manipulating sections A, B, C. The sheet 4 is fed through feeding rolls 3 towards the interior of a heating chamber 2 forming section A and within which the heating step of the method of the invention is carried out. The conveying track 12 has an input end portion in which the feeding rolls 3 are placed and an output end for discharing the molded strips.

The heating chamber 2 includes a cover 9 in order to insulate the chamber from the surrounding.

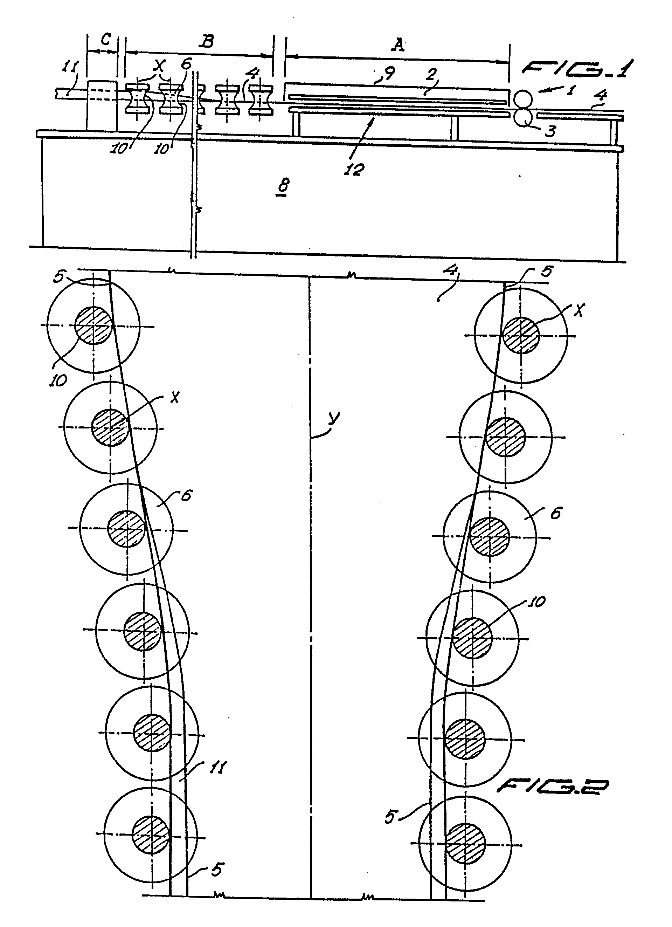

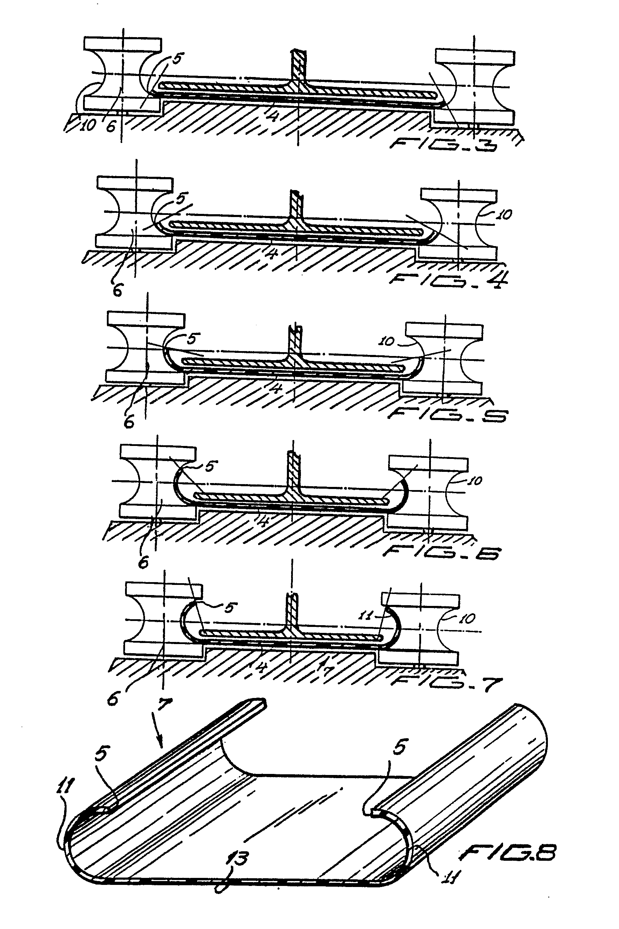

Once the semi-soft sheet 4 exits heating chamber 2, the material is mechanically molded in molding zone B by means of a plurality of molding rolls 6, which have molding wall surfaces 10. The rolls 6 are each mounted to rotate about its respective axis X, whereby during the molding of the sheet 4 the friction forces are extremely reduced between the sheet 4 and said molding wall surfaces 10. The vertical axes X of the rolls 6 are arranged in two symmetric groups, each group in turn is arranged at each side of a symmetry axis Y which is the center line of the conveying path 12 in at least the molding zone B. The molding rolls 6, are so arranged that they converge towards the output end of the conveying track 12. In this way the sheet 4 is bent in the zones of its lateral edges 5 (see Figures 3 to 7) in order to form flanges or lateral walls 11, as shown. Thus the flanger 11 provides the necessary means to achieve a self-supporting modular strip.

As the sheet 4 passes through the pairs of rolls 6, it is progressively bent, and at the last pair of rolls of the series, the final or desired shape 7 is achieved which is shown in Figures 7 and 8.

In order to avoid that the central portion 3, which must remain planar, becomes curved or moved up, a guiding member, such as a plate 14 is provided and which width decreases as the space between successive opposite rolls 6 decreases. Plate 14 forms with a support base 15 a guide for the central portion of the plastic sheet 4 in process.

At the output of the molding section B, a cooling section C is arranged where the strip 7, already molded, is subject to a cooling step, either by means of pressurized air or by means of some liquid, for example sprayed water. The cooling zone as will be obvious to anybody skilled in the art may include some kind of pressurized air blowing nozzles or liquid sprayers.

As to the operation of the apparatus although the time during which the sheet 4 is subject to the several steps, is not critical, as was explained above with reference to the method, it is important to point out that due to design requirements for the apparatus, it is convenient to adopt preferred times in order to have an apparatus of convenient length. For example, the sheet 4, should reach the temperature of approximately 150°C in an approximately 45 seconds within the heating chamber 2.

The molding step of operative section B should be performed within approximately 6 seconds, since after such a time the softeness of the material decreases and shaping becomes critical. Of course, in case the operative section B is provided with some kind of insulating cover, the shaping time can be extended. On the other hand, such time may be reduced if the conveying speed during the shaping step can be increased.

No critical handling times exist in cooling zone C and therefore no specific parameters are given.

By means of the method and the apparatus of the present invention, it is now possible to produce structural members, such as modular strips 7, by using plastic laminate materials, having sufficient rigidity and self-supporting characteristics.

Needless to say that with the hereinabove described method and pertinent apparatus, it is also possible to produce bodies having different shapes. For instance, it is conceivable to produce shapes where the two opposite lateral edges 5 are further bent until they face each other to thus define a tubular member, where said facing lateral edges 5 are welded together. Thereafter the top and/or bottom portions of each a tubular member can be closed by pertinent lids, if desired.

The preferred embodiment of the modular strip of the invention comprises an elongated laminar body formed by a substantially planar central portion 13 and a pair of curved flanges or lateral walls 11. The resulting modular strip has a C-shaped cross-sectional profile, forming a self-supporting strip structure. The flanges 11 conveying the necessary rigidity to the strip structure and are the housing for hangers in turn fixed to the roof. By arranging a plurality of such strip member on adjacent to each other and hanging them on the hangers a decorative ceiling may be formed.

The strips are substantially totally plymerized and furthermore are substantially tension free at least in the planar portions 13, so that these portions can be perforated to give access to electrical wiring, pipes of air conditioning systems, etc. Obviously the length of each strip will be determined on the basis of the final requirements regarding the structure to be built.

The invention has been described in an illustrative manner, and it is to be understood that the terminology which has been used is intended to be in the nature of words of description rather than limitation. Many modifications and variations of the present invention are possible in light of the above teachings. It is therefore, to be understood that within the scope of the accompanying claims, the invention may be practiced otherwise than specifically described.

## Claims

1. A method for manufacturing structural constitutive members, such as modular strips, covering profiles, decorative panels, containers and the like, from a plastic laminate such as a high-pressure decorative plastic laminate, said plastic laminate being partially polymerized at a first percentage of its total polymerization, said method characterized by the steps of heating said plastic laminate up to a temperature within the range of 120° to 170°C, to carry out a second polymerization of the plastic laminate, molding said plastic laminate into the desired shape simmultaneously with said second polymerization and during a period of time which, as a maximum, is equal to that period of time during which said second polymerization is carried out, subjecting said already molded structural member to a flow of cooling fluid to thereby cooling and definitively stabilizing said structural member to its final shape, said second polymerization extending up to a second percentage, thus substantially completing the total polymerization of the plastic laminate.

2. A method according to claim 1, characterized in that said second polymerization ends during the cooling step.

3. A method according to claim 2, characterized in that said laminate is based on melamine and cellulose, and the laminate is heated, during the heating step, at 150°C for 45 seconds.

4. A method according to claim 3, characterized in that the period of time of said molding step is substantially 6 seconds.

5. A method according to claim 4, characterized in that said first percentage is between 40% and 60% and said second percentage is substantially 80% to 98%.

6. An apparatus for manufacturing modular strips according to the method of the preceding claims, characterized by a mounting frame defining a conveying track for said plastic laminate and resulting modular strip, the conveying track having an input end for a laminate sheet member and an output end for the resulting modular strip, said track including from said input end towards said output end, a heating chamber connected to a mechanical molding zone having a plurality of molding wall surfaces placed on each side of the longitudinal center line of the track, said molding zone ending in a cooling zone for the already molded strip and said cooling zone ending into said output end.

7. An apparatus according to claim 6, characterized in that each one of said molding wall surfaces form part of a molding roll the rotation axis of each of which is vertically arranged with respect to said conveying track, there being provided a plurality of pairs of molding rolls which are symmetrically placed on each side of said longitudinal center line of the track, the molding rolls converging towards said longitudinal center line.

8. A modular strip adapted to form decorative liners, coverings in general, ceilings and the like, using a partially polymerized plastic laminate as starting material, characterized by an elongated laminar body comprising a substantially planar central portion defining a center line, a pair of facing curved flanges substantially extending along the total length of the central portion and at the lateral sides thereof, forming a C-like cross-section which is resistant and constitutes a self-supporting strip structure, the plastic lamiante of the strip being substantially totally polymerized up to a stabilized shape status, wherein at least the central portion of the strip is substantially tension free.

FIG.1

FIG.2

0 262 244

FIG.3

FIG.4

FIG.5

FIG.6

FIG.7

FIG.8

## EUROPEAN SEARCH REPORT

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 823 669 (ISOVOLTA ISOLIERSTOFF-VERTRIEBS) * Pages 4,5; page 6, last paragraph; figures 3,4 * | 1-5,8 | B 29 C 35/02 B 29 C 67/14 B 29 C 53/04 B 29 K 105:24 |
| Y | | 6,7 | |
| X | GB-A-1 013 942 (FOSTER & SONS LTD.) * Page 1, lines 10-15,83-86; claim 1 * | 1-3 | |
| X | GB-A-1 014 596 (FOSTER & SONS LTD.) * Page 1, lines 11-14; page 2, lines 33-61 * | 1-3 | |
| Y | GB-A- 543 131 (REDPATH, BROWN & CO.) * Page 2, line 109 - page 3, line 38; figures * | 6,7 | TECHNICAL FIELDS SEARCHED (Int. Cl.4) B 29 C B 21 D B 31 F |
| A | US-A-2 015 445 (BIERER et al.) * Figures 2-6 * | 6,7 | |
| A | FR-A-2 346 138 (TETRA PAK DEVELOPPEMENT) * Figure 3 * | 6,7 | |

The present search report has been drawn up for all claims

| Place of search | Date of completion of the search | Examiner |
|---|---|---|
| THE HAGUE | 26-11-1986 | ASHLEY G.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82